# EUROPEAN PATENT APPLICATION

(11) **EP 4 826 523 A1**
(43) Date of publication of application: **21.10.2026**
(21) Application number: 24910265.8
(22) Date of filing: 29.10.2024
(51) Int. Cl.: G06F 8/34

(54) **APPLICATION DEPLOYMENT METHOD AND APPARATUS, AND DEVICE**

(30) Priority: 27.12.2023 CN 202311823774; 16.04.2024 CN 202410458081
(71) Applicant: Huawei Cloud Computing Technologies Co., Ltd., Gui'an New District, Guizhou 550025 (CN)
(72) Inventor: DUAN, Yunpeng, Guiyang, Guizhou 550025 (CN); CHEN, Nan, Guiyang, Guizhou 550025 (CN); HU, Yanxingpeng, Guiyang, Guizhou 550025 (CN); KONG, Xin, Guiyang, Guizhou 550025 (CN); LI, Wenxiang, Guiyang, Guizhou 550025 (CN); SHAO, Chenrong, Guiyang, Guizhou 550025 (CN)
(74) Representative: Goddar, Heinz J.
(86) International application number: PCT/CN2024/128213
(87) International publication number: WO 2025/139326

(57) **Abstract**

This application discloses an application deployment method and apparatus, and a device, relating to the field of IT technologies, to decrease a quantity of deployed containers, thereby reducing resource usage. The method includes: A server provides a component orchestration interface. The component orchestration interface includes a component selection area and a component orchestration area. The component selection area includes a same-container component and a plurality of preset components, and the same-container component indicates that the plurality of preset components associated with the same-container component are to run in a same container. Then, in response to an operation performed by a user in the component orchestration area, the server creates a first same-container component in the component orchestration area, and determines a plurality of first preset components associated with the first same-container component. The plurality of preset components include the plurality of first preset components. Then, in response to a received application deployment request, the server deploys a target application including the plurality of first preset components, where the plurality of first preset components run in a first container corresponding to the first same-container component.

## Description

This application claims priorities to Chinese Patent Application No. 202311823774.X, filed with the China National Intellectual Property Administration on December 27, 2023 and entitled "APPLICATION ORCHESTRATION METHOD AND APPARATUS, COMPUTE DEVICE CLUSTER, AND STORAGE MEDIUM", and to Chinese Patent Application No. 202410458081.3, filed with the China National Intellectual Property Administration on April 16, 2024 and entitled "APPLICATION DEPLOYMENT METHOD AND APPARATUS, AND DEVICE", both of which are incorporated herein by reference in their entireties.

### TECHNICAL FIELD

Embodiments of this application relate to the field of IT technologies, and in particular, to an application deployment method and apparatus, and a device.

### BACKGROUND

An application orchestration service is a technology for developing applications through graphical orchestration. When using an application orchestration service, a user may orchestrate a plurality of components through simple operations such as dragging and dropping, and configure parameters for the components, thereby completing application development.

After application development is completed, a server may deploy the application based on each component in the application. Specifically, the server may create a corresponding container for each component, and each container runs the corresponding component. However, because each container consumes a quantity of resources during startup, the server needs to allocate resources to each container when starting the containers. As a result, the application occupies a large quantity of resources, thereby reducing resource utilization efficiency.

### SUMMARY

This application provides an application deployment method and apparatus, and a device, to decrease a quantity of deployed containers, thereby reducing resource usage.

According to a first aspect, this application provides an application deployment method. The method includes providing a component orchestration interface. The component orchestration interface includes a component selection area and a component orchestration area. The component selection area includes a same-container component and a plurality of preset components. The same-container component indicates that a plurality of preset components associated with the same-container component are to run in a same container. The component orchestration area is used to provide an operation area for a user to orchestrate a component. The plurality of preset components include a service component and/or a logical component. Then, in response to an operation performed by a user in the component orchestration area, a first same-container component may be created in the component orchestration area, and a plurality of first preset components associated with the first same-container component may be determined. The plurality of preset components include the plurality of first preset components. Then, a target application including a plurality of first preset components is deployed in response to the received application deployment request. The plurality of first preset components run in a first container corresponding to the first same-container component.

Based on the foregoing technical solution, the plurality of first preset components may be orchestrated by using the first same-container component, and both the first same-container component and the plurality of first preset components may run in a same container. In this way, during application deployment, a server may load a plurality of components by using one container, thereby decreasing a quantity of deployed containers, and decreasing a quantity of resources consumed by the containers. In addition, because the plurality of first preset components all correspond to the first container, it indicates that one container may run a plurality of components, so that the plurality of components may be accessed in the container by using a memory, thereby improving access efficiency between the components, and improving application smoothness.

With reference to the first aspect, in a possible design, in response to a received application release request, the target application is generated based on all components in the component orchestration area. All the components include the same-container component and the plurality of first preset components.

With reference to the first aspect, in another possible design, the component orchestration interface further includes a component configuration area. A size of a target resource amount is obtained from the component configuration area corresponding to the first same-container component. The target resource amount is a resource amount required by the first container corresponding to the first same-container component. The target resource amount is allocated to the first container.

It may be understood that, because the first same-container component includes the plurality of first preset components, when the first container is created, the target resource amount may be allocated to the first container based on a deployment parameter in the first same-container component, to ensure that the first container can run the plurality of first preset components. In addition, because the plurality of first preset components run in one first container, there is no need to separately allocate a resource amount required for startup to a container of each component, thereby decreasing a quantity of resources consumed by containers.

With reference to the first aspect, in another possible design, each first preset component is decompressed to obtain a decompressed file corresponding to each first preset component. Then, all decompressed files corresponding to the plurality of first preset components may be compressed to obtain an integrated component, and the target application is generated based on the integrated component.

It may be understood that, the plurality of first preset components are integrated to obtain the integrated component. In this way, when the first container is deployed, only the integrated component needs to be loaded, so that the first container can run the plurality of first preset components, thereby decreasing a quantity of deployed containers.

With reference to the first aspect, in another possible design, all interfaces of the invoked first preset components may be updated to an interface of the invoked integrated component.

In this way, when invoking the first preset component, another component may invoke the integrated component to implement a function of the first preset component and complete parameter transfer.

With reference to the first aspect, in another possible design, the target application may be generated based on all components in the component orchestration area and connection relationships between the respective components among all the components.

With reference to the first aspect, in another possible design, all the components include the plurality of first preset components, and the connection relationships between the respective components among all the components include a connection relationship between the first preset components.

With reference to the first aspect, in another possible design, all the components further include at least one second preset component, the second preset component is any component in the plurality of preset components, and the second preset component is outside the first same-container component. The connection relationships between the respective components among all the components further include a connection relationship between the second preset component and an edge component, and the edge component is a component among the plurality of first preset components that has a connection relationship with the second preset component.

In other words, the component orchestration area not only includes the first preset component, but also includes the second preset component.

With reference to the first aspect, in another possible design, the at least one second preset component includes at least one third preset component, the edge component includes an edge input component, and the third preset component is a component that transfers a parameter to the edge input component. An output parameter of each third preset component may be obtained. Then, the output parameter of each third preset component may be aggregated to obtain an input parameter set of the first same-container component. Then, a mapping relationship between each parameter in the input parameter set and an input parameter of the edge input component may be established based on a connection relationship between each third preset component and the edge input component.

It may be understood that, establishing the mapping relationship between each parameter in the input parameter set and the input parameter of the edge input component can ensure that parameters can be normally transferred between containers when the application is running.

With reference to the first aspect, in another possible design, the at least one second preset component further includes at least one fourth preset component, the edge component further includes an edge output component, and the edge output component is a component that transfers a parameter to the fourth preset component. An output parameter of each edge output component may be obtained. Then, the output parameter of each edge output component is aggregated to obtain an output parameter set of the first same-container component. Then, a mapping relationship between each parameter in the output parameter set and an input parameter of the fourth preset component is established based on a connection relationship between each fourth preset component and the edge output component.

It may be understood that, establishing the mapping relationship between each parameter in the output parameter set and the input parameter of the fourth preset component can ensure that parameters can be normally transferred between containers when the application is running.

With reference to the first aspect, in another possible design, when the first container is running, a parameter is transferred between the plurality of first preset components by using a target data structure, and the target data structure is a data structure used in a memory.

In this way, because a speed of transferring a parameter in the memory is high, and the plurality of first preset components transfer parameters in the memory by using the target data structure. This can improve data transfer efficiency, reduce a delay, and improve an application running speed.

According to a second aspect, this application provides an application deployment apparatus, including: a processing module, configured to: in response to an operation performed by a user in a component orchestration area, create a first same-container component in the component orchestration area, and determine a plurality of first preset components associated with the first same-container component. The plurality of preset components include the plurality of first preset components. The processing module is further configured to: in response to a received application deployment request, deploy a target application including the plurality of first preset components. The plurality of first preset components run in a first container corresponding to the first same-container component.

According to a third aspect, this application provides a compute device cluster. The compute device cluster includes at least one compute device, and each compute device includes a processor and a memory. The processor of the at least one compute device is configured to execute instructions stored in the memory of the at least one compute device, so that the compute device cluster performs the method according to any one of the first aspect and the possible designs of the first aspect.

According to a fourth aspect, this application provides a computer-readable storage medium. The computer-readable storage medium includes computer instructions; and when the computer instructions are run on an electronic device, the electronic device is enabled to perform the method according to any one of the first aspect and the possible designs of the first aspect.

According to a fifth aspect, this application provides a computer program product. When the computer program product runs on an electronic device, the electronic device is enabled to perform the method according to any one of the first aspect and the possible designs of the first aspect.

According to a sixth aspect, this application provides a chip system. The chip system is used in an electronic device. The chip system includes one or more interface circuits and one or more processors. The interface circuit and the processor are connected through a line. The interface circuit is configured to receive a signal from the memory of the electronic device, and send the signal to the processor. The signal includes computer instructions stored in the memory. When the processor executes the computer instructions, the electronic device performs the method according to any one of the first aspect and the possible designs of the first aspect.

It may be understood that, for beneficial effects that can be achieved by the application deployment apparatus according to the second aspect, the compute device cluster according to the third aspect, the computer-readable storage medium according to the fourth aspect, the computer program product according to the fifth aspect, and the chip system according to the sixth aspect, refer to the beneficial effects in any one of the first aspect and the possible designs of the first aspect. Details are not described herein again.

### BRIEF DESCRIPTION OF DRAWINGS

FIG. 1 is a diagram of an example of component orchestration according to an embodiment of this application;
FIG. 2 is a diagram of composition of an application deployment system according to an embodiment of this application;
FIG. 3 is a diagram of a system architecture of an application deployment platform according to an embodiment of this application;
FIG. 4 is a flowchart of an application deployment method according to an embodiment of this application;
FIG. 5 is a diagram of another example of component orchestration according to an embodiment of this application;
FIG. 6 is a diagram of another example of component orchestration according to an embodiment of this application;
FIG. 7 is a diagram of another example of component orchestration according to an embodiment of this application;
FIG. 8 is a diagram of an example of component configuration according to an embodiment of this application;
FIG. 9 is a flowchart of another application deployment method according to an embodiment of this application;
FIG. 10 is a diagram of an example of an application deployment method according to an embodiment of this application;
FIG. 11 is a flowchart of another application deployment method according to an embodiment of this application;
FIG. 12 is a diagram of an example of an application deployment interface according to an embodiment of this application;
FIG. 13 is a diagram of an example in which a plurality of components run in a container according to an embodiment of this application;
FIG. 14 is a diagram of composition of an application deployment apparatus according to an embodiment of this application;
FIG. 15 is a diagram of structure composition of a compute device according to an embodiment of this application;
FIG. 16 is a diagram of structure composition of a compute device cluster according to an embodiment of this application; and
FIG. 17 is a diagram of structure composition of another compute device cluster according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by persons of ordinary skill in the art based on embodiments of this application without creative efforts shall fall within the protection scope of this application.

In addition, the character "/" in this application usually indicates an "or" relationship between associated objects. For example, A/B may be understood as "A or B".

The terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more such features. In the descriptions of embodiments, unless otherwise specified, "a plurality of" means two or more.

In addition, the terms "including", "having", or any other variant thereof in descriptions of this application are intended to cover a non-exclusive inclusion. For example, a process, a method, a system, a product, or a device that includes a series of steps or modules is not limited to the listed steps or modules, but optionally further includes another unlisted step or module, or optionally further includes another inherent step or module of the process, the method, the product, or the device.

In addition, in embodiments of this application, the term "example" or "for example" represents giving an example, an illustration, or a description. Any embodiment or design scheme described as an "example" or "for example" in this application should not be explained as being more preferred or having more advantages than another embodiment or design scheme. To be precise, use of the term "example" or "for example" is intended to present a concept in a specific manner.

To facilitate understanding of the technical solutions in this application, before the method for obtaining a depth image in embodiments of this application is described in detail, the following introduces professional terms mentioned in embodiments of this application.
1. Application orchestration is a graphical orchestration technology. A user can perform secondary development on applications through simple operations such as dragging and dropping and configuring parameters, and can re-combine and orchestrate developed applications to improve application development efficiency. In addition, after application orchestration, the user may release the orchestrated application as a service, and provide the service externally in a form of an application programming interface (application programming interface, API).
2. A canvas is a carrier of application orchestration. On the canvas, a user can drag and drop various functional components to orchestrate the functional components, and configure component parameter values, for displaying secondarily developed applications in a form of a procedure.
3. A component (component) is a basic building block in low-code development, and may include specific service logic and related data. The component can implement a specific function. For example, a video playing component can implement a video playing function, and a video decoding component can implement a video decoding function. One application (application, APP) may include one or more components. The component may have a user interface, or may have no user interface.

For example, the video decoding component may have no user interface, to be specific, a process in which an electronic device decodes a video by using the video decoding component may not be displayed on the user interface, and a user is unaware of the process. A single component may run independently in user equipment. For example, a video playing component may be installed on a television, and then the television plays a video by using the video playing component. For another example, the component may be a user interface (UI) element, for example, a button, a text box, or a table, or may be a part of service logic, such as data processing or process control.

Each component includes one component body and several connection points (input connection points or output connection points). One component transfers data to another component through connection points. Generally, one component includes at least one input connection point and/or at least one output connection point. Alternatively, some components may have no connection point, that is, such components have no input connection point or output connection point. In embodiments of this application, a component that can be used to form an application includes at least one connection point.

The connection point is an external intelligent interface of the component, namely, an agent that implements an input or output function, and is responsible for performing interface protocol check, negotiation and interconnection, data transfer, and the like with another connection point. The connection point is a way for the component to receive input data from another component, and is also a way for the component to output data to another component. The connection point includes an input connection point or an output connection point. Generally, each connection point may support one or more types of data entities (Entities). The data entity supported by the connection point may be an image, an audio, a video, text, or the like.

After the professional terms mentioned in embodiments of this application are described, the following describes a conventional technology.

With the advancement of industrial digitalization, service scenarios of application orchestration are gradually enriched, and types and quantities of components required by applications also increase accordingly. During application development, a user may require a large quantity of components to complete application development. Currently, the user may orchestrate and combine a plurality of components through simple operations such as dragging and dropping, and configure parameters for the components, thereby completing application development. During application deployment, a server can create a corresponding container for each component, and each container runs a service corresponding to the component.

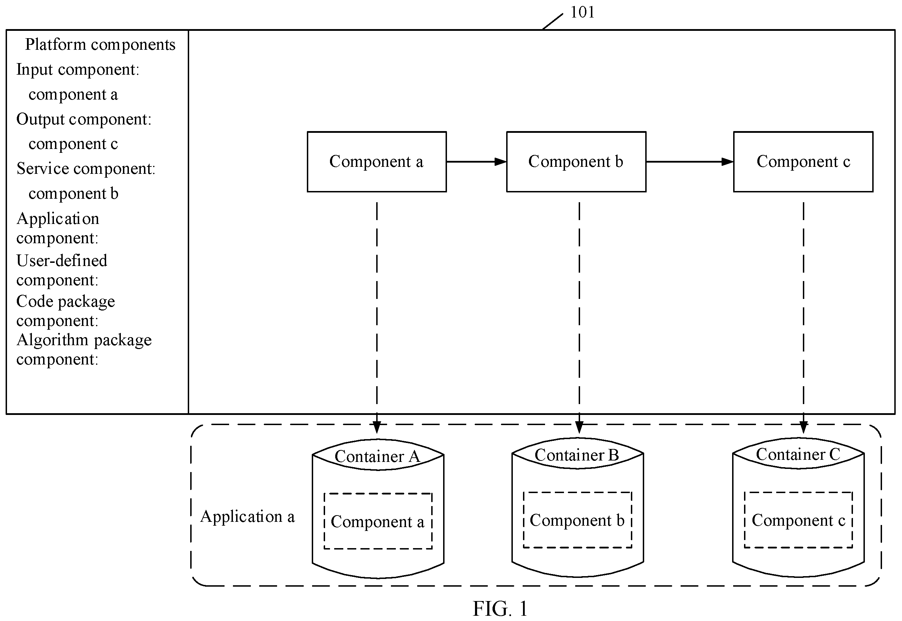

For example, as shown in FIG. 1, a canvas 101 includes a component a, a component b, and a component c (all of which are platform components, namely, components provided by a platform). When an application a including the component a, the component b, and the component c is deployed, the server may separately deploy a container A corresponding to the component a, a container B corresponding to the component b, and a container C corresponding to the component c, and then start the containers corresponding to the components included in the application a, so that when the deployed application a is used, the components included in the application a are invoked from the containers, to implement functions of the application.

However, because an independent running environment needs to be created when the container is started, the container consumes a specific quantity of resources during startup. As a result, when the user does not use the application, a large quantity of resources of the server are already occupied, thereby reducing resource utilization efficiency. For example, it can be learned with reference to FIG. 1 that, when the server starts the container a, the container b, and the container c, a specific quantity of resources need to be allocated to each container. In addition, when the deployed application is used, data needs to be transmitted between containers through a network, thereby completing mutual collaboration between the containers. However, intercontainer communication is affected by factors such as a network topology, a network bandwidth, and a network load, which may cause a delay in data transmission between the containers.

In conclusion, in the foregoing technical solution, when there are a large quantity of components, not only a quantity of containers increases, resulting in occupying a large quantity of resources of the server, but also a data transmission delay between the containers is high, causing freezing of the application, and affecting user experience.

In view of this, an embodiment of this application provides an application deployment method. In the method, a server may provide a component orchestration interface. The component orchestration interface includes a component selection area and a component orchestration area. The component selection area includes a same-container component and a plurality of preset components, and the same-container component indicates that the plurality of preset components associated with the same-container component are to run in a same container. A first same-container component corresponds to a first container. Then, an electronic device may display the first same-container component in the component orchestration area in response to a selection operation on the first same-container component, and display a plurality of first preset components in the first same-container component in response to selection operations on the plurality of first preset components in the plurality of preset components. The plurality of first preset components correspond to the first container. Then, the electronic device sends an application release request to the server in response to an application release operation. The server may obtain all components in the component orchestration area from the component orchestration interface, and generate a target application.

In other words, the plurality of first preset components may be orchestrated by using the first same-container component, and both the first same-container component and the plurality of first preset components may run in a same container. In this way, during application deployment, the server may load a plurality of components by using one container, thereby decreasing a quantity of deployed containers, and decreasing a quantity of resources consumed by the containers. In addition, because the plurality of first preset components all correspond to the first container, it indicates that one container may run a plurality of components, so that the plurality of components may be accessed in the container by using a memory, thereby improving access efficiency between the components, and improving application smoothness.

The following describes an implementation environment of embodiments of this application.

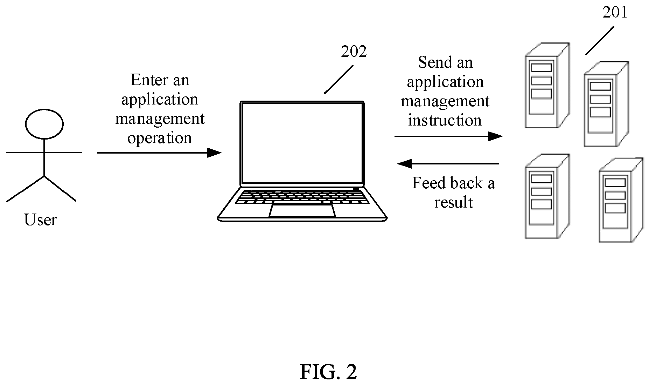

FIG. 2 shows an application deployment system according to an embodiment of this application. The application deployment system includes a compute device cluster 201 and at least one electronic device (for example, an electronic device 202). The compute device cluster 201 may perform wireless/wired communication with the electronic device 202.

The compute device cluster 201 may be connected by using a group of loosely integrated computer software or hardware to closely collaborate with each other to complete computing work, or the compute device cluster 201 may be considered as a computer. A single computer in the compute device cluster 201 is usually referred to as a node. Nodes may be connected to each other through a local area network, high-speed interconnection, remote direct memory access (remote direct memory access, RDMA), a distributed shared memory, or the like. The compute device cluster 201 may include one or more of a high availability cluster, a load balancing cluster, a high-performance compute cluster, and a high availability cluster. The compute device cluster 201 may include a hardware resource (for example, a server, a memory, or a central processing unit (central processing unit, CPU)) and a service resource (for example, software or an integrated development environment).

The electronic device in embodiments of this application may be a device like a tablet computer, a mobile phone, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR)/virtual reality (virtual reality, VR) device, or a vehicle-mounted device. A specific form of the electronic device is not specifically limited in embodiments of this application.

In embodiments of this application, the compute device cluster 201 may be configured to provide application development and deployment services, that is, orchestrate and combine different components to generate a new application. For example, an application deployment platform (or application development software) is deployed in the compute device cluster 201, and the application deployment platform is configured to orchestrate and combine components to generate an application. The compute device cluster 201 may receive an application generation instruction of the electronic device 202. The application generation instruction instructs to generate an application by using a plurality of components. The compute device cluster 201 may generate the application based on the application generation instruction. In addition, the compute device cluster 201 may receive a deployment instruction of the electronic device 202, and deploy the application.

The electronic device 202 may log in to the application deployment platform and provide a visualized interface. The electronic device 202 may receive an application management operation of a user, to indicate, in combination with the user operation, the compute device cluster 201 to execute an instruction for managing the application. For example, the electronic device 202 may display an interface of the application deployment platform. The user may perform an operation on the interface of the application deployment platform, and the electronic device 202 sends a development instruction or a deployment instruction to the compute device cluster 201, to instruct the compute device cluster 201 to execute a corresponding task.

After the implementation environment of embodiments of this application is described, the following describes the application deployment platform deployed in the compute device cluster 201.

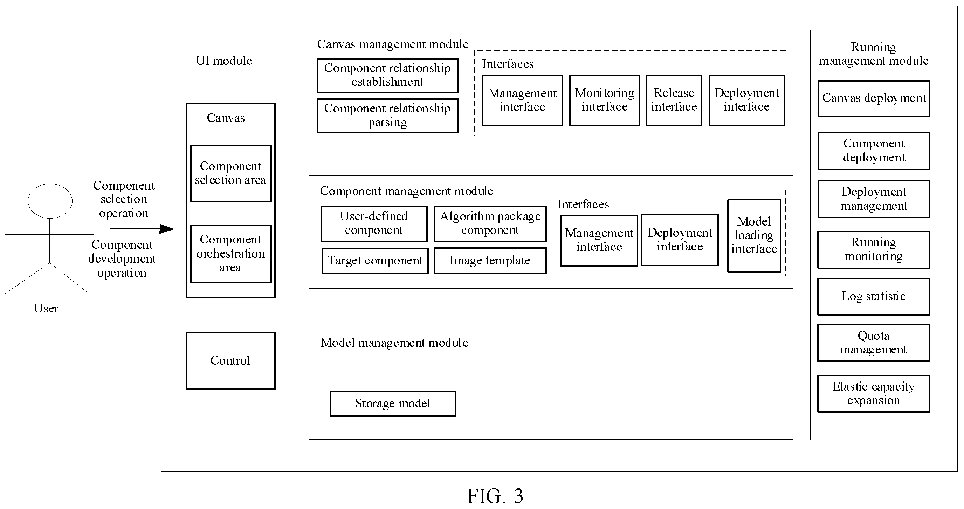

FIG. 3 shows an application deployment platform (which may also be referred to as an application deployment platform) according to an embodiment of this application. The application deployment platform includes a user interface (user interface, UI) module, a canvas management module, a component management module, and a running management module.

The UI module is configured to display a canvas on a UI, and the canvas includes a component selection area and a component orchestration area. The component selection area is used to provide a to-be-orchestrated component for a user. The component selection area may include a plurality of preset components. The component orchestration area is used to display a component selected by the user. The UI module is further configured to: receive an operation of the user and execute a corresponding instruction. For example, the UI module may receive an operation such as dragging and dropping performed by the user on a component in the component selection area, and display, in the component orchestration area, the component operated by the user. For another example, the UI module may further include a control (for example, a configuration control), and the configuration control is configured to receive a configuration operation performed by the user on the component, for configuring the component, and displaying configuration information of the component on the UI. For another example, the UI module may receive a component defined operation of the user and generate a new component.

Optionally, the canvas may further include a component configuration area, and the component configuration area is used to set parameters of a component, such as an input parameter, an output parameter, and a deployment parameter.

The canvas management module may provide a plurality of interfaces, such as a management interface, a monitoring interface, a release interface, and a deployment interface. The management interface is used to add or delete a component on the canvas. The monitoring interface is used to implement changes (for example, changes in quantity and relationships) of components on the canvas. The release interface is used to release a component on the canvas as an application. The deployment interface is used to deploy the component on the canvas.

The component management module is configured to manage a component on the application deployment platform. For example, the component management module may store a plurality of components, such as a user-defined component (for example, a python component), an image component, a same-container component, an algorithm package component, and a component startup image template (referred to as an image template for short). The user-defined component is a component developed by the user. The image component is a component corresponding to a created image file. The algorithm package component is a component including a plurality of code blocks and dependency packages. The component startup image template is used to provide an image file for a component other than the image component, so that the application deployment platform loads the component based on the image file and creates a container. In addition, the component management module may further include a management interface, a deployment interface, and a model loading interface. The management interface is used to manage (for example, add or delete) a component on the component management module. The deployment interface is used to deploy the component on the component management module. The model loading interface is used to load a model in a model library.

The running management module is configured to manage running of an application. For another example, the running management module may be used to deploy the component on the canvas, that is, deploy each component on the canvas in a form of a container, so that the container runs the component to provide a service of the component. For another example, the running management module may be used to deploy the component on the component management module. For another example, the running management module may manage a deployment process, for example, a deployment position (for example, deploying the application on a server in the compute device cluster 201). For another example, the running management module may further monitor a running status of the application in real time, for example, whether the application runs abnormally. For another example, the running management module may further record a running log of the application, for example, an exception occurs during running at a moment. For another example, the running management module may further perform quota management on the component on the canvas, for example, increase a quantity of orchestratable components on the canvas. For another example, the running management module may further perform elastic capacity expansion, for example, increase a quantity of CPU cores, upgrade a network adapter, or upgrade a hard disk.

Optionally, the application deployment platform may further include a model management module. The model management module may be used to store a plurality of models. The model may be a model uploaded by the user, or the model may be a model obtained through training by using the application deployment platform.

It should be noted that the application deployment method provided in this application may be executed by an application deployment apparatus, and the application deployment apparatus may be a compute device cluster. The compute device cluster may be one or more server clusters including a plurality of servers. Alternatively, the compute device cluster may be a distributed cluster. Alternatively, the plurality of servers in the compute device cluster may be cloud servers. A specific implementation of the compute device cluster is not limited in embodiments of this application.

In addition, the application deployment apparatus may alternatively be a central processing unit (Central Processing Unit, CPU) of the compute device cluster, or a module that is in the compute device cluster and that is used to develop an application, or an application deployment platform deployed on the compute device cluster. Alternatively, the application deployment apparatus may be a server (for example, a physical server or a cloud server) in the compute device cluster. Alternatively, the application deployment apparatus may further include an electronic device, and the electronic device is logged in to an application deployment platform (or application deployment software). In the following embodiments, an example in which the server and the electronic device perform the application deployment method is used to describe the application deployment method provided in embodiments of this application.

In embodiments of this application, the application deployment method may be divided into Step 1 and Step 2. Step 1 is that the user develops an application through a component orchestration interface displayed by the electronic device. Step 2 is that the server develops an application by using a component configured on the orchestration interface.

The following first describes Step 1, namely, a process in which the user develops the application through the component orchestration interface displayed by the electronic device. In Step 1, the electronic device may log in to an application deployment platform deployed on the server, and display the component orchestration interface. Then, the user may enter an operation on the electronic device, to control the electronic device to place a plurality of components into one component and release an application.

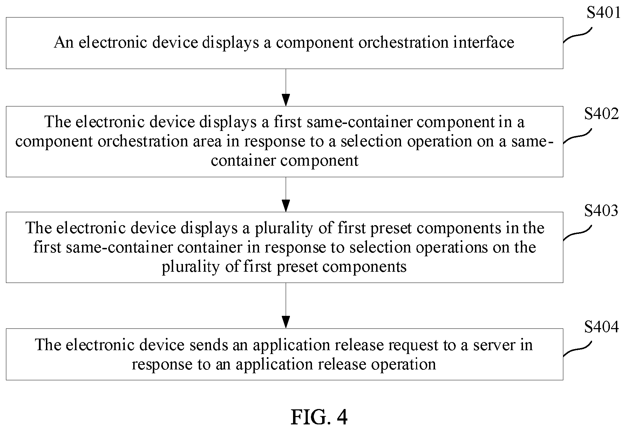

An embodiment of this application provides an application deployment method. As shown in FIG. 4, the application deployment method may include the following steps.

S401: An electronic device displays a component orchestration interface.

The component orchestration interface includes a component selection area and a component orchestration area. The component selection area is used to provide a to-be-orchestrated component for a user, and the component selection area includes a plurality of preset components. The component orchestration area is used to display a component selected by the user. The component orchestration area is used to provide an operation area for the user to orchestrate a component.

In a possible design, the preset component may include a service component and/or a logical component. The service component is a component that can execute a service function, and the logical component is a component that can execute a logical function.

It should be noted that the service component is a reusable module designed and developed to implement a specific service function. The service component can exist independently and has clear input, processing, and output to complete a specific service task. The logical component usually encapsulates a group of closely related logical operations, so that developers can invoke and manage these operations more conveniently, thereby improving maintainability and reusability of code.

In embodiments of this application, the component selection area may further include a same-container component, and the same-container component indicates that a plurality of preset components associated with the same-container component are to run in a same container. The same-container component is a component pre-developed by an application deployment platform.

In some embodiments, before the electronic device displays the component orchestration interface, the electronic device may create the component orchestration interface. The electronic device may receive an orchestration interface creation operation of the user, and the electronic device may display the component orchestration interface in response to the orchestration interface creation operation.

For example, the electronic device may display a home page interface of the application deployment platform. The home page interface includes an application development option, and the orchestration interface creation operation may be an operation (for example, a tap operation) performed by the user on the application development option. For another example, the orchestration interface creation operation may be an operation entered by the user in a voice manner, for example, the user enters a voice instruction "Create a component orchestration interface".

Optionally, the electronic device may receive an interface configuration operation, and the electronic device may set configuration information of the component orchestration interface in response to the interface configuration operation. The configuration information of the component orchestration interface may include: a name of the component orchestration interface, description information of the component orchestration interface, and the like.

The name of the component orchestration interface may identify the component orchestration interface, and the description information of the component orchestration interface may be used to describe information such as a function and a version of the component orchestration interface.

For example, the component orchestration interface may include a name input box and a description information input box. In response to an operation of entering "Orchestration interface of an application a" in the name input box and an operation of entering "Used to implement a computing function" in the description information input box by the user, the name of the component orchestration interface is set to "Orchestration interface of an application a", and the description information is "Used to implement a computing function".

S402: The electronic device displays a first same-container component in the component orchestration area in response to a selection operation on the same-container component.

The first same-container component corresponds to a first container.

It should be understood that, that the first same-container component corresponds to the first container means that the first same-container component corresponds to a first image file corresponding to the first container, and after the first container is created by using the first image file, the first container can run the first same-container component. The first same-container component is a logical component.

In a possible implementation, the electronic device displays the first same-container component in the component orchestration area in a form of a dashed-line box or solid-line box in response to the selection operation on the same-container component.

It should be noted that the selection operation is not limited in embodiments of this application. For example, the selection operation may be a tap operation. For another example, the selection operation may be an operation such as dragging, pulling, or moving. A shape of the dashed-line box or the solid-line box is not limited in embodiments of this application. For example, the dashed-line box may be displayed in the component orchestration area in a shape like a rectangle, a square, or a circle.

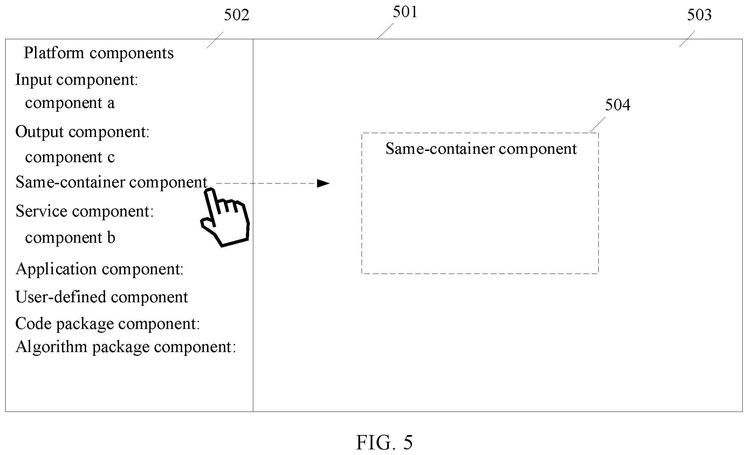

In an example, as shown in FIG. 5, a canvas 501 (namely, the component orchestration interface) may include a component selection area 502 (for example, a component tree) and a component orchestration area 503. The component selection area 502 may include a platform component (for example, an input component, an output component, and a same-container component (namely, a same-container component like DEPLOY-TOGETHER)), a service component, an application component, a user-defined component, and the like. In response to a drag operation performed by the user on the same-container component 504, the electronic device displays the same-container component 504 on the canvas 501.

Optionally, the electronic device may display the plurality of first same-container components in the component orchestration area in response to a plurality of selection operations on the same-container component.

S403: The electronic device displays a plurality of first preset components in the first same-container component in response to selection operations on the plurality of first preset components.

The first preset component is any one of the plurality of preset components, and the plurality of first preset components correspond to the first container.

It should be understood that, that the plurality of first preset components correspond to the first container means that the plurality of first preset components correspond to the first image file corresponding to the first container, and after the first container is created by using the first image file, the first container can run the plurality of first preset components. In other words, the first container may run the plurality of first preset components.

In this way, the plurality of first preset components share one container, and there is no need to create a container for each first preset component. This can decrease a quantity of resources consumed by the container, and improve resource utilization efficiency.

It should be noted that a quantity of first preset components is not limited in embodiments of this application. For example, the quantity of first preset components may be three, five, eight, or the like. A type of the first preset component is not limited in embodiments of this application. For example, the first preset component may be a platform component, a service component, a user-defined component, or the like.

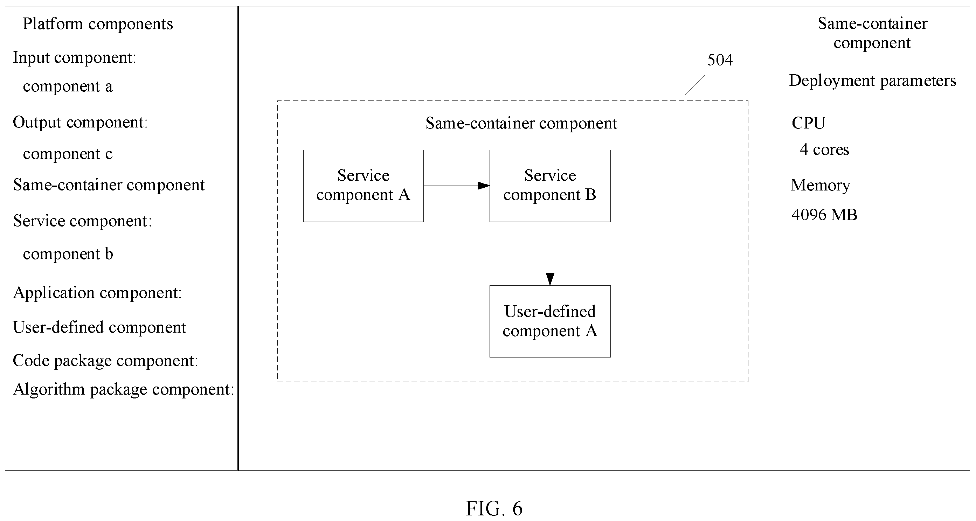

For example, with reference to FIG. 5, as shown in FIG. 6, the electronic device displays a service component A, a service component B, and a user-defined component A in the same-container component 504 in response to drag operations performed by the user on the service component A, the service component B, and the user-defined component A (the components are all in the component selection area, and are not shown in FIG. 6).

In some embodiments, after the plurality of first same-container components are displayed in the component orchestration area, the electronic device may receive an orchestration operation on the plurality of first preset components. The electronic device may establish a connection relationship between the plurality of first preset components in response to the orchestration operation on the plurality of first preset components. In addition, the electronic device may display the connection relationship between the plurality of first preset components.

For example, it can be learned with reference to FIG. 6 that there is a connection relationship between the service component A and the service component B, there is a connection relationship between the service component B and the user-defined component A, there is a connection line between the service component A and the service component B (the connection line may have an arrow or may not have an arrow), and there is a connection line between the service component B and the user-defined component A.

It should be noted that the orchestration operation may include: a connection operation between components and an adjustment operation of a connection relationship between components (that is, changing the connection relationship between the components). An implementation of the orchestration operation is not limited in embodiments of this application. For example, the user may implement an orchestration operation on a component through an operation on the component, for example, tapping any position of the component in the component orchestration area. For another example, the user may implement an orchestration operation on components through an operation on a connection point of the components, for example, tapping the connection point of the components. For another example, the user may implement an orchestration operation on components by entering a connection relationship. For example, there is an input box in the component orchestration area, and the input box is used to set a connection relationship between the components (for example, enter "Establish a relationship between the service component A and the service component B" in the input box).

In a possible implementation, the plurality of first preset components may include a first subcomponent, a second subcomponent, and a third subcomponent. In response to a connection operation of connecting the first subcomponent to the second subcomponent by the user, the electronic device may connect the first subcomponent to the second subcomponent, and display a connection line between the first subcomponent and the second subcomponent. In response to a connection operation of connecting the second subcomponent to the third subcomponent by the user, the electronic device may connect the second subcomponent to the third subcomponent, and display a connection line between the second subcomponent and the third subcomponent.

In this application, components having a connection line have a connection relationship, and the connection relationship indicates parameter transfer between the components. For example, with reference to FIG. 6, there is a connection line between the service component A and the service component B, and there is a connection line between the service component B and the user-defined component A. An output parameter of the service component A is an input parameter of the service component B, and an output parameter of the service component B is an input parameter of the user-defined component A.

Optionally, the electronic device may update the connection relationship between the plurality of first preset components in response to an adjustment operation performed by the user on the connection relationship between the plurality of first preset components.

It should be understood that the connection relationship between the components indicates parameter transfer between the components.

It may be understood that the electronic device may establish the connection relationship between the plurality of first preset components through an orchestration operation on the plurality of first preset components. In this way, when a plurality of components run in one container, a running sequence between the components and a data transmission direction in the container can be ensured, so that the container can run normally.

S404. The electronic device sends an application release request to the server in response to an application release operation.

The application release request indicates to generate a target application based on all components in the component orchestration area. The application release request may include component identifiers of all the components in the component orchestration area and connection relationships between the respective components among all the components in the component orchestration area.

In a possible design, the component orchestration interface may include a release option, and the release option is used to trigger generation of an application by using all the components in the component orchestration area. The application release operation is an operation performed by the user on the release option.

In embodiments of this application, all the components in the component orchestration area may include the first same-container component and the plurality of first preset components in the first same-container component.

It should be noted that the plurality of first preset components in the first same-container component are components located in an area in which the first same-container component is located in the component orchestration area (for example, the service component A, the service component B, and the user-defined component A that are located in the same-container component 504 in FIG. 6).

Optionally, all the components in the component orchestration area may further include at least one second preset component. The second preset component is any one of the plurality of preset components, and the second preset component is outside the first same-container component. To be specific, the second preset component is a preset component that is in the component orchestration area and that is not in the first same-container component.

In some embodiments, before the electronic device receives the application release operation of the user, the electronic device may receive a selection operation performed by the user on the second preset component, display the at least one second preset component in the component orchestration area in response to the selection operation on the at least one second preset component, and then establish a connection relationship between the second preset component and an edge component in response to an orchestration operation on the second preset component and the edge component in the plurality of first preset components. The edge component is a component among the plurality of first preset components that has a connection relationship with the second preset component.

That is, a connection relationship may be established between the first preset component in the first same-container component and a component outside the first same-container component by using the edge component.

It should be noted that a quantity of edge components is not limited in embodiments of this application. For example, there may be one, three, or five edge components.

In a possible design, the edge component may include an edge input component and/or an edge output component. The edge input component is configured to receive a parameter transferred by the second preset component, and the edge output component is configured to transfer a parameter to the second preset component.

In other words, an input source of the edge input component is a second preset component connected to the edge input component, and an output parameter of the second preset component is an input parameter of the edge input component. An output source of the edge output component is a second preset component connected to the edge output component, and an input parameter of the second preset component is an output parameter of the edge output component.

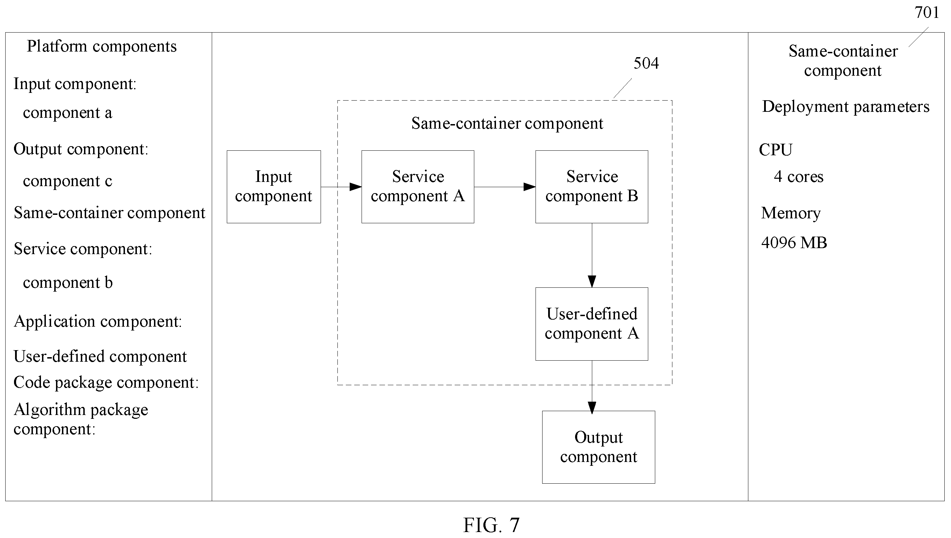

For example, with reference to FIG. 6, as shown in FIG. 7, the electronic device displays an input component and an output component on the canvas 501 in response to drag operations performed by the user on the input component and the output component. In addition, the electronic device displays a connection line between the input component and the service component A (namely, the edge input component) on the canvas 501 in response to a connection operation performed by the user on the input component and the service component A. The electronic device displays a connection line between the output component and the user-defined component A (namely, the edge output component) on the canvas 501 in response to a connection operation performed by the user on the output component and the user-defined component A.

It may be understood that, the electronic device may establish the connection relationship between the second preset component and the edge component through the orchestration operation on the second preset component and the edge component in the plurality of first preset components. In this way, it can be ensured that a container corresponding to the second preset component and the first container can normally access each other, thereby ensuring that the application can run normally.

Optionally, the electronic device may establish a connection relationship between different second preset components in response to orchestration operations on the different second preset components.

Based on the foregoing technical solution, after displaying the component orchestration interface, in response to selection operations on the same-container component and the plurality of first preset components, the electronic device may display the first same-container component in the component orchestration area, and display the plurality of first preset components in the first same-container component. That is, a plurality of components are all located in one component. Then, when the electronic device sends the application release request to the server, the server may generate the target application based on all the components in the component orchestration area. Because both the first same-container component and the first preset components correspond to the first container, when deploying the target application, the server may run the plurality of first preset components in one first container. In this way, a quantity of deployed containers can be reduced, thereby reducing resources consumed by the containers.

In some embodiments, before the electronic device receives the application release operation, the electronic device may receive an orchestration saving operation of the user. The electronic device may send an orchestration saving message to the server in response to the orchestration saving operation. The orchestration saving message indicates to save all components on the component orchestration interface, a connection relationship between the components, and configuration information of the components. Then, the server may save all the components on the component orchestration interface, the connection relationship between the components, and the configuration information of the components.

It may be understood that, the server may save an orchestration record of the user in a timely manner through the orchestration saving operation, so that the user can continue to perform orchestration subsequently, thereby improving application development efficiency.

The foregoing describes a process of orchestrating the components on the component orchestration interface. The following describes a process of configuring a component on the component orchestration interface.

In some embodiments, before the electronic device receives the application release operation of the user, the electronic device may configure configuration information of the component in response to a configuration operation on the component.

In embodiments of this application, the application release request may further include the configuration information of all the components on the component orchestration interface.

It should be noted that the configuration information of the component is not limited in embodiments of this application. For example, the configuration information of the component may include: a component identifier (for example, a component ID or a component name), a component version, a component service, an input parameter, an output parameter, a deployment parameter, and the like. The component ID and the component name are unique. The component service indicates a service provided by the component. The input parameter is a parameter received by the component. The output parameter is a parameter transferred by the component to another component. The deployment parameter indicates a quantity of resources required for deploying a container corresponding to the component. The deployment parameter may include: a specification name, a virtual machine specification (for example, 1U2G or 2U4G, where "1U2U" may mean one CPU and 2 GB of memory). Alternatively, 1 unit (unit, U) is a unit that represents a height or thickness of an external size of the server (for example, 1U=4.445 centimeters), or a disk size (for example, 32 GB or 100 GB).

It should be noted that some information (such as the component ID, the component name, and the component version) in the configuration information may be data entered by the user, or may be data preset by the application deployment platform. This is not limited in embodiments of this application.

In a possible implementation, the electronic device may set a target resource amount in the component configuration area in response to a configuration operation on the first same-container component. The target resource amount is a resource amount required by the first container corresponding to the first same-container component. Configuration information of the first same-container component includes a deployment parameter.

It should be understood that, because components running in the first container include a plurality of first preset components, the target resource amount is actually a resource amount required for running the plurality of first preset components.

For example, with reference to FIG. 7, the electronic device displays a component configuration area 701 on the component orchestration interface in response to an operation performed by the user on the same-container component 504. The component configuration area 701 includes a deployment parameter. Then, the electronic device may set the deployment parameter of the same-container component 504 to 4 CPU cores and 4096 megabytes (MB) of memory in response to an operation of entering the deployment parameter in the component configuration area 701 by the user.

It may be understood that, because the first container corresponds to the plurality of first preset components, setting the target resource amount in the component configuration area by the electronic device can ensure that sufficient resources can be allocated to the first container, to ensure that the first container runs the plurality of first preset components. In addition, because all the plurality of first preset components run in the first container corresponding to the first same-container component, the user does not need to configure a deployment parameter for each first preset component, so that a configuration process of the user can be reduced.

Optionally, the electronic device may configure configuration information of each first preset component in response to a configuration operation on the first preset component in the component orchestration area.

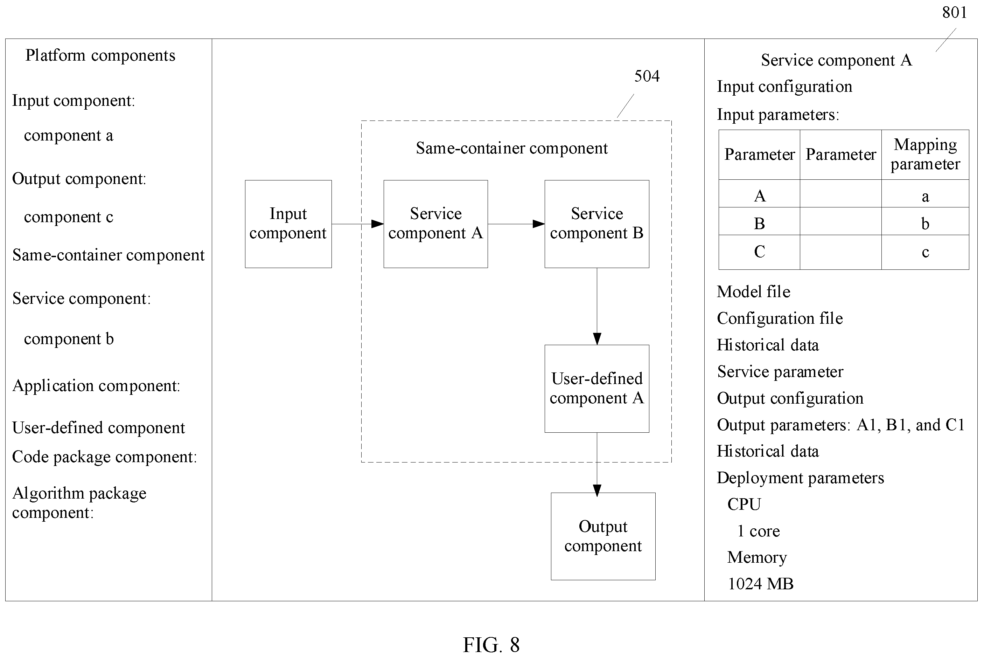

For example, with reference to FIG. 7, as shown in FIG. 8, the electronic device may display a component configuration area 801 in response to a configuration operation on the service component A. The component configuration area 801 includes an input configuration and an output configuration. The input configuration includes: a configuration of an input parameter, a configuration of an input file (including a configuration file and a model file), input historical data, a service parameter, and the like. For example, in the configuration of the input parameter, the input parameter of the component A includes A, B, and C, a mapping parameter of A is a (namely, an output parameter a of the input component), a mapping parameter of B is b (namely, an output parameter b of the input component), and a mapping parameter of C is c (namely, an output parameter c of the input component). The output configuration includes: a configuration of an output parameter (for example, A1, B1, and C1) and output historical data. Optionally, the component configuration area 801 further includes a configuration of a deployment parameter.

It should be noted that, because the service component A is in the same-container component 504, the service component A finally runs in a container corresponding to the same-container component 504. Therefore, a deployment configuration in the component configuration area 801 is invalid information.

Optionally, the configuration information of the first preset component does not include a deployment parameter.

Optionally, the electronic device may configure configuration information of each second preset component in response to a configuration operation on the second preset component in the component orchestration area.

The foregoing describes a process in which the electronic device implements Step 1 (that is, the user develops the application through the component orchestration interface displayed by the electronic device). The following describes a process of Step 2 (that is, the server develops the application by using the component configured on the orchestration interface).

In some embodiments, before receiving the application deployment request, in response to the received application release request, the server generates the target application based on all the components in the component orchestration area. All the components include the same-container component and the plurality of first preset components.

The following describes the process in which the server generates the target application based on all the components in the component orchestration area. In a process in which the server generates the target application based on all the components in the component orchestration area, the server needs to separately perform the following three processes to obtain the target application. The three processes include: a process 1 (determining a relationship between all the components), a process 2 (integrating the plurality of first preset components in the first same-container component), and a process 3 (processing a parameter transferred by the edge component).

It should be noted that a sequence in which the server performs the process 1, the process 2, and the process 3 is not limited in embodiments of this application. For example, the server may first perform the process 1, then perform the process 2, and then perform the process 3. For another example, the server may first perform the process 2, then perform the process 1, and then perform the process 3. For another example, the server may perform the process 1, the process 2, and the process 3 at the same time.

The following first describes a process in which the server performs the process 1, namely, a process in which the server determines the relationship between all the components.

In this embodiment of this application, the server may obtain a connection relationship between all the components in the component orchestration area from the component orchestration interface. Then, the server may determine a relationship between components based on the connection relationship between all the components in the component orchestration interface.

It should be noted that the relationship between the components is identities (an input source or an output source) of every two components during parameter transfer. For example, it can be learned with reference to FIG. 6 that, in a relationship between the service component A and the service component B, the service component A is an input source, and the service component B is an output source. In a relationship between the service component B and the user-defined component A, the service component B is an input source, and the user-defined component A is an output source.

In a possible design, the relationship between the components includes a relationship between the plurality of first preset components.

Optionally, the relationship between the components may further include a relationship between the second preset component and the edge component, and a relationship between a second preset component and a second preset component.

It may be understood that, the server determines the relationship between all the components, so that mutual coordination between the components can be ensured during application running, and the application can run normally.

After the process 1 is described, the following describes the process 2, namely, a process in which the server integrates the plurality of first preset components in the first same-container component.

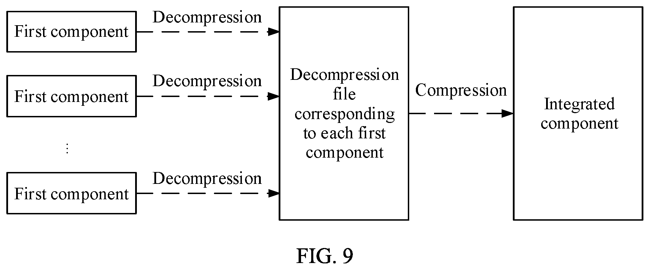

An embodiment of this application provides an application deployment method. As shown in FIG. 9, the application deployment method may include: The server may decompress each first preset component to obtain a decompressed file corresponding to each first preset component. Then, the server compresses all decompressed files corresponding to the plurality of first preset components to obtain an integrated component. Then, the server may generate the target application based on the integrated component.

It should be noted that the decompressed file is not limited in embodiments of this application. For example, the decompressed file corresponding to the first preset component may include a static resource (for example, an HTML, a CSS, or a JavaScript file), application program code (for example, Python or Node.js code), and the like. In addition, in this embodiment of this application, because the plurality of first preset components are integrated into the integrated component, the relationship between the second preset component and the edge component is specifically a relationship between the second preset component and the integrated component.

It should be noted that, for specific descriptions of generating the target application by the server based on the integrated component, refer to a process in which the component orchestration platform generates an application in response to an operation of releasing the application in a conventional technology. Details are not described herein. For example, the released target application may include at least one of the following: a software package of the integrated component, an application programming interface (application programming interface, API), an image file, an image configuration file, and the like. The API can complete same communication between containers (for example, invoking of a method between programs). The image configuration file is configuration information used when the image file is started. The configuration information may include: a database link address, a user name, a password, middleware connection information, log server connection information, a log format, and the like.

It may be understood that, the server integrates the plurality of first preset components to obtain the integrated component. In this way, when deploying the first container, the server needs to load only the integrated component, so that the first container can run the plurality of first preset components, thereby decreasing the quantity of deployed containers.

In this embodiment of this application, after the integrated component is generated, the server may update an interface of the invoked first preset component to an interface of the integrated component.

For example, the interface of the first preset component is an interface a, and the interface of the integrated component is an interface b. Before the integrated component is generated, the component 1 needs to invoke the interface a when invoking the first preset component. After the integrated component is generated, the component 1 needs to invoke the interface b when invoking the first preset component.

In this way, when invoking the first preset component, another component may invoke the integrated component to implement a function of the first preset component and complete parameter transfer.

After the process 2 is described, the following describes the process 3, namely, a process in which the server processes a parameter transferred by the edge component.

In this embodiment of this application, the server may generate the target application based on all the components in the component orchestration area and the connection relationships between the respective components among all the components.

In a possible design, all the components include the plurality of first preset components, and the connection relationships between the respective components among all the components include the connection relationship between the first preset components. The server may determine the relationship between the plurality of first preset components based on the connection relationship between the plurality of first preset components. Then, the server may generate the target application based on the plurality of first preset components and the relationship between the plurality of first preset components and the first preset component.

Optionally, all the components may further include the at least one second preset component. The connection relationships between the respective components among all the components may further include the connection relationship between the second preset component and the edge component.

It should be noted that, because the edge component includes the edge input component and/or the edge output component, it indicates that the second preset component may include an input source of the edge component and/or an output source of the edge component.

In a possible implementation, the at least one second preset component includes at least one third preset component, the edge component includes the edge input component, and the third preset component is a component that transfers a parameter to the edge input component. The server may obtain an output parameter of each third preset component. Then, the server may aggregate an output parameter of each third preset component to obtain an input parameter set of the first same-container component. Then, the server may establish, based on a connection relationship between each third preset component and the edge input component, a mapping relationship between each parameter in the input parameter set and an input parameter of the edge input component.

In other words, the input parameter set is all parameters input into the first same-container component. It should be understood that, in this application, the plurality of first preset components are all in the first same-container component, and the integrated component is generated by using the plurality of first preset components. Therefore, the parameter input into the first same-container component is a parameter input into the integrated component.

For example, it is assumed that the edge input component includes a component a and a component b, input parameters of the component a are a1 and a2, an input parameter of the component b is b1, the at least one third preset component includes a component c and a component d, output parameters of the component c are c1 and c2, and an output parameter of the component d is d1. There is a connection relationship between the component c and the component a, and there is a connection relationship between the component d and the component b. Table 1 shows a mapping relationship between the input parameter set and the input parameter of the edge input component.

**Table 1**

| Input parameter set | Input parameter of the edge input component |
|---|---|
| c1 | a1 |
| c2 | a2 |
| d1 | b1 |

That is, there is a mapping relationship between the output parameter c1 of the component c and the input parameter a1 of the component a, there is a mapping relationship between the output parameter c2 of the component c and the input parameter a2 of the component a, and there is a mapping relationship between the output parameter d1 of the component d and the input parameter b1 of the component b.

It may be understood that, establishing a mapping relationship between each parameter in the input parameter set and the input parameter of the edge input component can ensure that parameters can be normally transferred between the containers when the application is running.

In another possible implementation, the at least one second preset component includes at least one fourth preset component, the edge component further includes the edge output component, and the edge output component is a component that transfers a parameter to the fourth preset component. The server may obtain an output parameter of each edge output component. Then, the server may aggregate the output parameter of each edge output component to obtain an output parameter set of the first same-container component. Then, a mapping relationship between each parameter in the output parameter set and an input parameter of the fourth preset component is established based on a connection relationship between each fourth preset component and the edge output component.

In other words, the output parameter set is all parameters output by the first same-container component. It should be understood that, in this application, the plurality of first preset components are all in the first same-container component, and the integrated component is generated by using the plurality of first preset components. Therefore, the parameter output by the first same-container component is a parameter output by the integrated component.

For example, it is assumed that the edge output component includes a component e and a component f, output parameters of the component e are e1 and e2, an output parameter of the component f is f1, the at least one fourth preset component includes a component g and a component h, input parameters of the component g are g1 and g2, and an input parameter of the component h is h1. There is a connection relationship between the component e and the component g, and there is a connection relationship between the component f and the component h. Table 2 shows a mapping relationship between the output parameter set and the input parameter of the fourth preset component.

**Table 2**

| Output parameter set | Input parameter of the fourth preset component |
|---|---|
| e1 | g1 |
| e2 | g2 |
| f1 | h1 |

That is, there is a mapping relationship between the output parameter e1 of the component e and the input parameter g1 of the component g, there is a mapping relationship between the output parameter e2 of the component e and the input parameter g2 of the component g, and there is a mapping relationship between the output parameter f1 of the component f and the input parameter h1 of the component h.

It may be understood that, establishing a mapping relationship between each parameter in the output parameter set and the input parameter of the fourth preset component can ensure that parameters can be normally transferred between the containers when the application is running.

In another possible implementation, the plurality of second preset components include at least one third preset component and at least one fourth preset component, and the edge component includes the edge input component and the edge output component.

The following describes the process 3 with reference to a specific example.

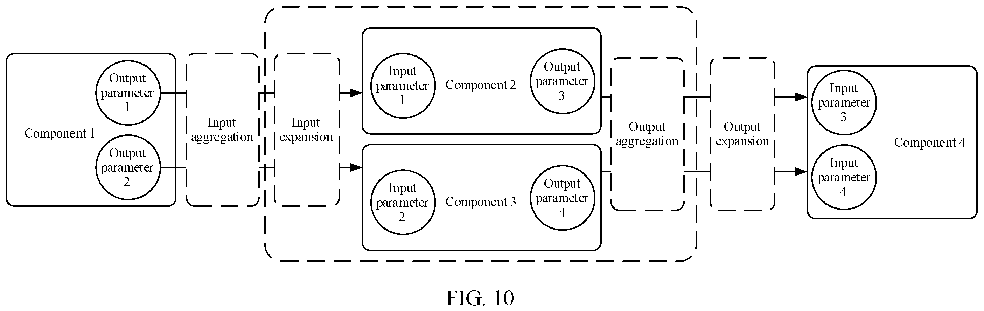

As shown in FIG. 10, the target application includes a component 1, a component 2, a component 3, and a component 4, and the component 2 and the component 3 correspond to a same container. The server may perform input aggregation on an output parameter 1 and an output parameter 2 of the component 1 to obtain an input set including the output parameter 1 and the output parameter 2. Then, the server may establish a mapping relationship between an input parameter 1 of the component 2 and the output parameter 1, and a mapping relationship between an input parameter 2 of the component 3 and the output parameter 2 (namely, input expansion). In addition, the server may perform output aggregation on an output parameter 3 of the component 2 and an output parameter 4 of the component 3 to obtain an output set including the output parameter 3 and the output parameter 4. Then, the server may establish a mapping relationship between an input parameter 3 of the component 4 and the output parameter 3, and a mapping relationship between an input parameter 4 of the component 4 and the output parameter 4 (namely, output expansion).

The foregoing describes Step 1 (the user develops the application through the component orchestration interface displayed by the electronic device) and Step 2 (the server develops the application by using the component configured on the orchestration interface) in the application development process. After the application is developed, the user may control, by using the electronic device, the server to deploy the released application. The following describes a process of deploying the application.

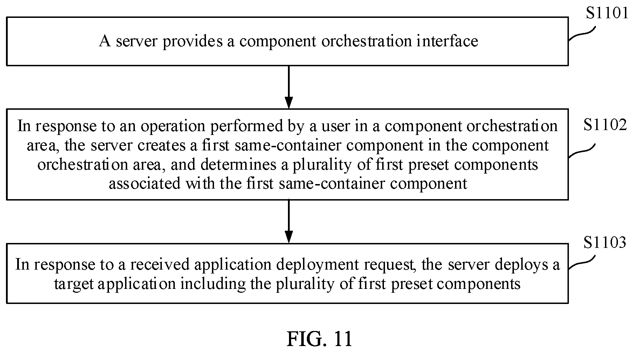

An embodiment of this application provides an application deployment method. As shown in FIG. 11, the application deployment method may include the following steps.

S1101: A server provides a component orchestration interface.

The component orchestration interface includes a component selection area and a component orchestration area. The component selection area includes a same-container component and a plurality of preset components. The same-container component indicates that a plurality of preset components associated with the same-container component are to run in a same container. The component orchestration area is used to provide an operation area for a user to orchestrate a component. The plurality of preset components include a service component and/or a logical component.

S1102: In response to an operation performed by the user in the component orchestration area, the server creates a first same-container component in the component orchestration area, and determines a plurality of first preset components associated with the first same-container component.

The plurality of preset components include a plurality of first preset components.

In a possible implementation, an electronic device may send a component orchestration request to the server in response to the operation performed by the user in the component orchestration area. The operation performed by the user in the component orchestration area may include the selection operation performed on the same-container components in S402 and the selection operations performed on the plurality of first preset components in S403.

Optionally, the operation in the component orchestration area may further include an orchestration operation on a plurality of components (for example, the plurality of first preset components and/or a plurality of second preset components).

S1103: In response to a received application deployment request, the server deploys a target application including the plurality of first preset components.

The plurality of first preset components run in a first container corresponding to the first same-container component.

In some embodiments, the electronic device may receive an application deployment operation of the user. The electronic device may send the application deployment request to the server in response to the application deployment operation. The application deployment request indicates to deploy the target application. The deployed target application includes the first container, and the first container is configured to run the plurality of first preset components.

It should be understood that, that the first container runs the plurality of first preset components means that the first container runs an integrated component.

In an example, the component orchestration interface further includes a deployment option. The electronic device may receive a selection operation performed by the user on the deployment option, and send an application deployment request to the server.

In another example, the electronic device may display an application list. The application list includes an application identifier of a released application. Then, the electronic device sends an application deployment request to the server in response to a deployment operation performed by the user on the target application.

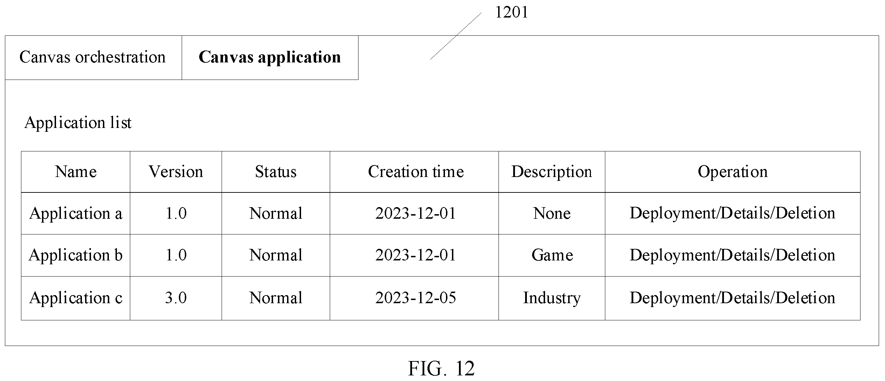

As shown in FIG. 12, the electronic device may display an application deployment interface 1201. The application deployment interface 1201 includes an application identifier (for example, a name), a version, a status, creation time, description information, and an operation option (for example, deployment, details, or deletion). The electronic device may indicate to deploy an application a in response to an operation on a deployment option of the application a.

In this embodiment of this application, the server may obtain the application deployment request. The application deployment request indicates to deploy the target application. Then, the server may deploy the first container based on the first same-container component and the plurality of first preset components. The first container is configured to run the plurality of first preset components. The first container is further used to run the first same-container component.

In a possible implementation, the server may create the first container based on the first same-container component, the integrated component, and a target image file corresponding to the first same-container component. Then, the server may deploy the first container in a target environment.

It should be noted that the target environment is not limited in embodiments of this application. For example, the target environment may be the server. For another example, the target environment may be any server in a compute device cluster in which the server is located.

In a possible design, the server may obtain, from the component orchestration interface, a size of a target resource amount. The target resource amount is a resource amount required by the first container corresponding to the first same-container component. Then, the server may allocate the target resource amount to the first container.

For example, with reference to FIG. 7, the target resource amount may be 4 CPU cores and 4096 megabytes (MB) of memory.

It may be understood that, because the first same-container component includes the plurality of first preset components, when creating the first container, the server may allocate the target resource amount to the first container based on a deployment parameter in the first same-container component, to ensure that the first container can run the plurality of first preset components. In addition, because the plurality of first preset components run in one first container, the server does not need to separately allocate a resource amount required for startup to a container of each component, thereby decreasing a quantity of resources consumed by containers.

In some embodiments, the deployed target application further includes a second container corresponding to each second preset component, and the second container is configured to run the corresponding second preset component.

It should be noted that deployment environments of the first container and the second container are not limited in embodiments of this application. For example, the first container and the second container may be deployed in a same deployment environment (for example, a same server). For another example, the first container and the second container may be deployed in different deployment environments.

Based on the foregoing technical solution, the first same-container component may be created in the component orchestration area and the plurality of first preset components associated with the first same-container component may be determined by using operations performed by the user in the component orchestration area. In this way, during application deployment, the first same-container component and the plurality of first preset components may all run in a same container. In this way, a plurality of components may be loaded by using one container, thereby decreasing a quantity of deployed containers, and decreasing a quantity of resources consumed by the containers. In addition, because a plurality of components may run in one container, the plurality of components may be accessed in the container by using a memory, thereby improving access efficiency between the components, and improving application smoothness.

The foregoing describes a process of deploying the target application. The following describes a process of running the target application.

In some embodiments, when the first container is running, a parameter may be transferred between the plurality of first preset components by using a target data structure. The target data structure is a data structure used in the memory.

It should be understood that, transferring a parameter in a container is transferring a parameter in a same memory. Therefore, a data structure used by the transferred parameter needs to be a data structure used in the memory. The target data structure is not limited in embodiments of this application. For example, the target data structure may include but is not limited to a queue, an array, a linked list, a stack, and the like. The following describes a process of running the first container by using an example in which the target data structure is a queue.

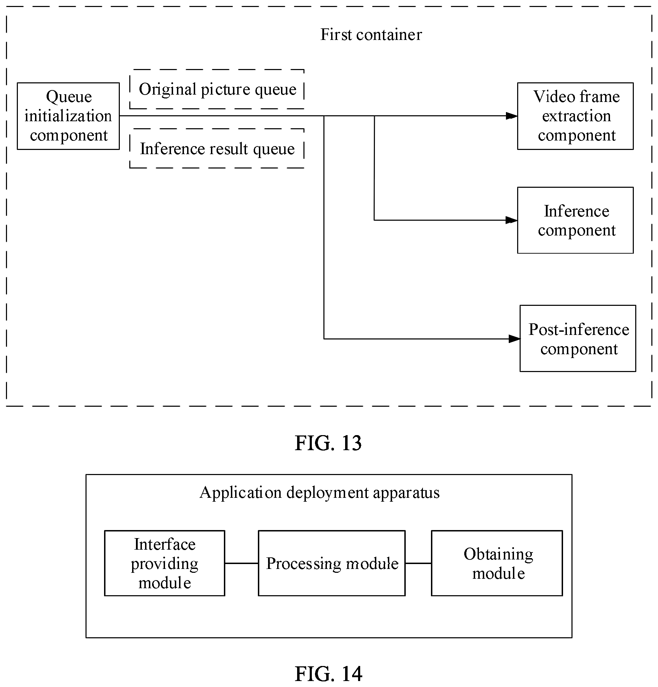

As shown in FIG. 13, an initialization queue component, a video frame extraction component, an inference component, and a post-processing component run in the first container. The initialization queue component may initialize two queues (an original picture queue and an inference result queue), and transfer the two queues as output parameters to the video frame extraction component and the inference component for use. The video frame extraction component may obtain a video stream, extract frames from the video stream to obtain a plurality of pictures, and store the pictures in the original picture queue. The inference component may read the pictures stored in the original picture queue, perform inference on the pictures to obtain an inference result, and store the inference result in the inference result queue. The post-processing component may read the inference result from the inference result component, and perform post-processing on the inference result to obtain a post-processing result. Then, the post-processing component may feed back the post-processing result to the user.

In this way, because a speed of transferring a parameter in the memory is high, and the plurality of first preset components transfer parameters in the memory by using the target data structure. This can improve data transfer efficiency, reduce a delay, and improve an application running speed.

The foregoing mainly describes the solutions provided in embodiments of this application from a perspective of the electronic device. It may be understood that, to implement the foregoing functions, the electronic device includes a corresponding hardware structure and/or software module for performing each of the functions. Persons of ordinary skill in the art should easily be aware that, with reference to an example of an application deployment method described in embodiments disclosed in this application, this application can be implemented in a form of hardware or a combination of hardware and computer software. Whether a function is performed by hardware or hardware driven by electronic device software depends on a particular application and a design constraint of the technical solutions. Persons skilled in the art may use different methods to implement the described functions for each particular application, but it should not be considered that the implementation goes beyond the scope of this application.

In embodiments of this application, an application deployment apparatus may be divided into functional modules or functional units based on the foregoing method examples. For example, each functional module or functional unit may be obtained through division based on a corresponding function, or two or more functions may be integrated into one processing module. The integrated module may be implemented in a form of hardware, or may be implemented in a form of a software functional module or functional unit. In embodiments of this application, module or unit division is an example, and is merely a logical function division. In actual implementation, another division manner may be used.

This application further provides an application deployment apparatus. As shown in FIG. 14, the apparatus includes an interface providing module, a processing module, and an obtaining module.

The user interface providing module is configured to provide a component orchestration interface. The component orchestration interface includes a component selection area and a component orchestration area. The component selection area includes a same-container component and a plurality of preset components. The same-container component indicates that a plurality of preset components associated with the same-container component are to run in a same container. The component orchestration area is used to provide an operation area for a user to orchestrate a component. The plurality of preset components include a service component and/or a logical component.

The processing module is configured to: in response to an operation performed by the user in the component orchestration area, create a first same-container component in the component orchestration area, and determine a plurality of first preset components associated with the first same-container component. The plurality of preset components include the plurality of first preset components. The processing module is further configured to: in response to a received application deployment request, deploy a target application including the plurality of first preset components. The plurality of first preset components run in a first container corresponding to the first same-container component.

In a possible design, the processing module is further configured to: in response to a received application release request, generate a target application based on all components in the component orchestration area. The application release request indicates to generate the target application based on all the components in the component orchestration area, and all the components include the same-container component and the plurality of first preset components.

In another possible design, the component orchestration interface further includes a component configuration area. The obtaining module is configured to obtain, from the component configuration area corresponding to the first same-container component, a size of a target resource amount. The target resource amount is a resource amount required by the first container corresponding to the first same-container component. The processing module is configured to allocate the target resource amount to the first container.

In another possible design, the processing module is configured to decompress each first preset component to obtain a decompressed file corresponding to each first preset component. The processing module is configured to: compress all decompressed files corresponding to the plurality of first preset components to obtain an integrated component, and generate the target application based on the integrated component.

In another possible design, the processing module is configured to update all interfaces of the invoked first preset components to an interface of the invoked integrated component.

In another possible design, the processing module is configured to generate the target application based on all the components in the component orchestration area and connection relationships between the respective components among all the components.

In another possible design, all the components include the plurality of first preset components, and the connection relationships between the respective components among all the components include a connection relationship between the first preset components.

In another possible design, all the components further include at least one second preset component, the second preset component is any component in the plurality of preset components, and the second preset component is outside the first same-container component. The connection relationships between the respective components among all the components further include a connection relationship between the second preset component and an edge component, and the edge component is a component among the plurality of first preset components that has a connection relationship with the second preset component.

In another possible design, the at least one second preset component includes at least one third preset component, the edge component includes an edge input component, and the third preset component is a component that transfers a parameter to the edge input component. The processing module is further configured to obtain an output parameter of each third preset component. The processing module is further configured to aggregate the output parameter of each third preset component to obtain an input parameter set of the first same-container component. The processing module is further configured to establish, based on a connection relationship between each third preset component and the edge input component, a mapping relationship between each parameter in the input parameter set and an input parameter of the edge input component.

In another possible design, the at least one second preset component further includes at least one fourth preset component, the edge component further includes an edge output component, and the edge output component is a component that transfers a parameter to the fourth preset component. The processing module is further configured to obtain an output parameter of each edge output component. The processing module is further configured to aggregate the output parameter of each edge output component to obtain an output parameter set of the first same-container component. The processing module is further configured to establish, based on a connection relationship between each fourth preset component and the edge output component, a mapping relationship between each parameter in the output parameter set and an input parameter of the fourth preset component.

In another possible design, when the first container is running, a parameter is transferred between the plurality of first preset components by using a target data structure, and the target data structure is a data structure used in a memory.

The processing module, the obtaining module, and the interface providing module may all be implemented by using software, or may be implemented by using hardware. For example, the following uses the processing module as an example to describe an implementation of the processing module. Similarly, for implementations of the obtaining module and the interface providing module, refer to the implementation of the processing module.

The module is used as an example of a software functional unit, and the processing module may include code run on a computing instance. The computing instance may include at least one of a physical host (compute device), a virtual machine, and a container. Further, there may be one or more computing instances. For example, the processing module may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is set in one region. A communication gateway needs to be set in each VPC for communication between two VPCs in a same region or between VPCs in different regions. Interconnection between the VPCs is implemented through the communication gateway.

A module is used as an example of a hardware functional unit, and the processing module may include at least one compute device like a server. Alternatively, the processing module may be a device implemented using an application-specific integrated circuit (application-specific integrated circuit, ASIC) or a programmable logic device (programmable logic device, PLD) or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of compute devices included in the processing module may be distributed in a same region, or may be distributed in different regions. The plurality of compute devices included in the processing module may be distributed in a same AZ, or may be distributed in different AZs. Similarly, the plurality of compute devices included in the processing module may be distributed in a same VPC, or may be distributed in a plurality of VPCs. The plurality of compute devices may be any combination of compute devices such as a server, an ASIC, a PLD, a CPLD, an FPGA, and GAL.

It should be noted that, in another embodiment, the processing module may be configured to perform any step in the application deployment method, the obtaining module may be configured to perform any step in the application deployment method, and the interface providing module may be configured to perform any step in the application deployment method. The steps implemented by the processing module, the obtaining module, and the interface providing module may be specified as required. The processing module, the obtaining module, and the interface providing module separately implement different steps in the application deployment method to implement all functions of the application deployment apparatus.

A module is used as an example of a software functional unit, and the application deployment apparatus may include code run on a computing instance. The computing instance may be at least one of compute devices such as a physical host (compute device), a virtual machine, and a container. Further, there may be one or more compute devices. For example, the application deployment apparatus may include code run on a plurality of hosts/virtual machines/containers. It should be noted that the plurality of hosts/virtual machines/containers used to run the application may be distributed in a same region, or may be distributed in different regions. The plurality of hosts/virtual machines/containers used to run the code may be distributed in a same AZ, or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same VPC, or may be distributed in a plurality of VPCs. Usually, one VPC is disposed in one region. A communication gateway needs to be disposed in each VPC for crossregion communication between two VPCs in a same region or between VPCs in different regions. Interconnection between the VPCs is implemented through the communication gateway.

A module is used as an example of a hardware functional unit, and the application deployment apparatus may include at least one compute device like a server. Alternatively, the application deployment apparatus may be a device implemented by using an ASIC, a PLD, or the like. The PLD may be implemented by a CPLD, an FPGA, a GAL, or any combination thereof.

A plurality of compute devices included in the application deployment apparatus may be distributed in a same region, or may be distributed in different regions. The plurality of compute devices included in the application deployment apparatus may be distributed in a same AZ, or may be distributed in different AZs. Similarly, the plurality of compute devices included in the application deployment apparatus may be distributed in a same VPC, or may be distributed in a plurality of VPCs. The plurality of compute devices may be any combination of compute devices such as a server, an ASIC, a PLD, a CPLD, an FPGA, and GAL.

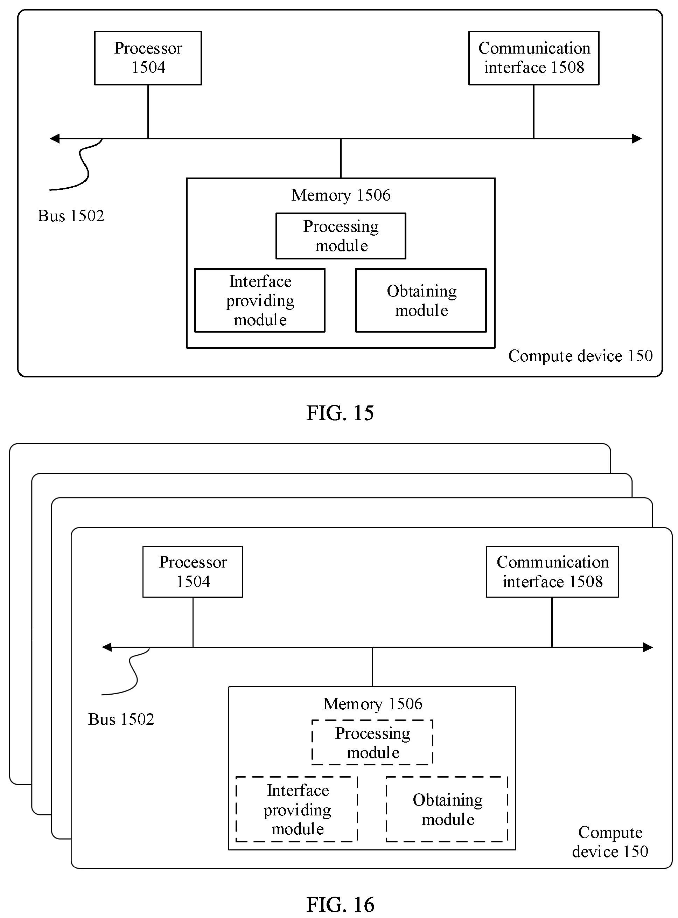

This application further provides a compute device 150. As shown in FIG. 15, the compute device 150 includes a bus 1502, a processor 1504, a memory 1506, and a communication interface 1508. The processor 1504, the memory 1506, and the communication interface 1508 communicate with each other through the bus 1502. The compute device 150 may be a server or a terminal device. It should be understood that quantities of processors and memories in the compute device 150 are not limited in this application.

The bus 1502 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by only one line in FIG. 15, but this does not indicate that there is only one bus or one type of bus. The bus 1504 may include a path for transmitting information between components (such as the memory 1506, the processor 1504, and the communication interface 1508) in the compute device 150.

The processor 1504 may include any one or more of the following processors: a central processing unit (central processing unit CPU), a graphics processing unit (graphics processing unit, GPU), a microprocessor (microprocessor, MP), a digital signal processor (digital signal processor DSP), or the like.

The memory 1506 may include a volatile memory (volatile memory), for example, a random access memory (random access memory, RAM). The processor 1504 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1506 stores executable program code, and the processor 1504 executes the executable program code to separately implement functions of the processing module, the obtaining module, and the interface providing module, to implement the application deployment method. That is, the memory 1506 stores instructions used to perform the application deployment method.

The communication interface 1503 uses a transceiver module, for example, but not limited to, a network interface card or a transceiver, to implement communication between the compute device 150 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

As shown in FIG. 16, the compute device cluster includes at least one compute device 150. Memories 1506 in one or more compute devices 150 in the compute device cluster may store same instructions for performing the application deployment method.

In some possible implementations, the memories 1506 in the one or more compute devices 150 in the compute device cluster may alternatively respectively store some instructions for performing the application deployment method. In other words, a combination of the one or more compute devices 150 may jointly execute the instructions for performing the application deployment method.

It should be noted that the memories 1506 in different compute devices 150 in the compute device cluster may store different instructions, and different instructions are separately used to perform some functions of the application deployment apparatus. In other words, the instructions stored in the memories 1506 in different compute devices 150 may implement functions of one or more of the processing module, the obtaining module, and the interface providing module.

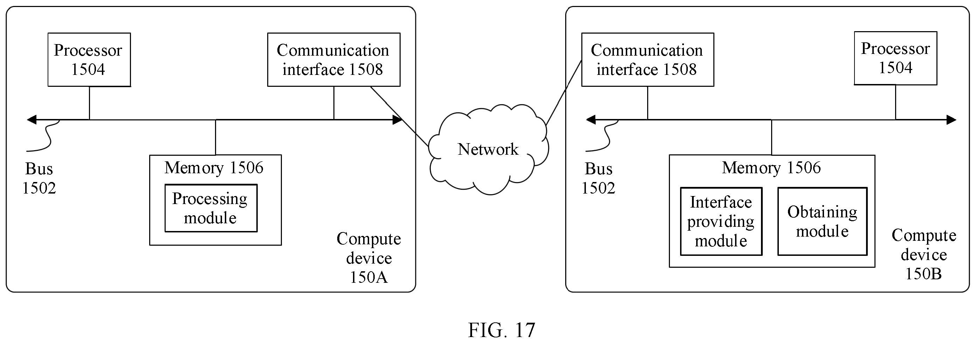

In some possible implementations, the one or more compute devices in the compute device cluster may be connected through a network. The network may be a wide area network, a local area network, or the like. FIG. 17 shows a possible implementation. As shown in FIG. 17, two compute devices 150A and 150B are connected to each other through a network. Specifically, each compute device is connected to the network through a communication interface in the compute device. In this possible implementation, a memory 1506 in the compute device 150A stores instructions for performing functions of the processing module. In addition, the memory 1506 in the compute device 150B stores instructions for performing functions of the obtaining module and the interface providing module.

A connection manner between compute device clusters shown in FIG. 17 may be that, in consideration that the application deployment method provided in this application requires storage of a large amount of data and a large amount of compute resources, it is considered that the functions implemented by the obtaining module and the interface providing module are performed by the compute device 150B.

It should be understood that functions of the compute device 150A shown in FIG. 17 may alternatively be completed by a plurality of compute devices 150. Similarly, functions of the compute device 150B may alternatively be completed by a plurality of compute devices 150.

An embodiment of this application further provides another compute device cluster. For a connection relationship between compute devices in the compute device cluster, refer to similar connection manners of the compute device clusters in FIG. 16 and FIG. 17. A difference lies in that memories 1506 in one or more compute devices 150 in the compute device cluster may store same instructions for performing the application deployment method.

In some possible implementations, the memories 1506 in the one or more compute devices 150 in the compute device cluster may alternatively respectively store some instructions for performing the application deployment method. In other words, a combination of the one or more compute devices 150 may jointly execute the instructions for performing the application deployment method.

An embodiment of this application further provides a computer program product including instructions. The computer program product may be software or a program product that includes the instructions and that can run on a compute device or can be stored in any usable medium. When the computer program product runs on at least one compute device, the at least one compute device is enabled to perform the application deployment method.

An embodiment of this application further provides a computer-readable storage medium. The computer-readable storage medium may be any usable medium accessible by a compute device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the compute device to perform the application deployment method or instruct the compute device to perform the application deployment method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. An application deployment method, wherein the method comprises:
providing a component orchestration interface, wherein the component orchestration interface comprises a component selection area and a component orchestration area, the component selection area comprises a same-container component and a plurality of preset components, the same-container component indicates that the plurality of preset components associated with the same-container component are to run in a same container, the component orchestration area is used to provide an operation area for a user to orchestrate a component, and the plurality of preset components comprise a service component and/or a logical component;
in response to an operation performed by the user in the component orchestration area, creating a first same-container component in the component orchestration area, and determining a plurality of first preset components associated with the first same-container component, wherein the plurality of preset components comprise the plurality of first preset components; and
in response to a received application deployment request, deploying a target application comprising the plurality of first preset components, wherein the plurality of first preset components run in a first container corresponding to the first same-container component.

2. The method according to claim 1, wherein before receiving the application deployment request, the method further comprises:
in response to a received application release request, generating the target application based on all components in the component orchestration area, wherein all the components comprise the first same-container component and the plurality of first preset components.

3. The method according to claim 1 or 2, wherein the component orchestration interface further comprises a component configuration area; and the method further comprises:
obtaining, from the component configuration area corresponding to the first same-container component, a size of a target resource amount, wherein the target resource amount is a resource amount required by the first container corresponding to the first same-container component; and
allocating the target resource amount to the first container.

4. The method according to any one of claims 1 to 3, wherein generating the target application based on all the components in the component orchestration area comprises:
decompressing each first preset component to obtain a decompressed file corresponding to each first preset component;
compressing all decompressed files corresponding to the plurality of first preset components to obtain an integrated component; and
generating the target application based on the integrated component.

5. The method according to claim 4, wherein after obtaining the integrated component, the method further comprises:
updating an interface of each invoked first preset component to an interface of the integrated component.

6. The method according to any one of claims 1 to 5, wherein generating the target application based on all the components in the component orchestration area comprises:
generating the target application based on all the components in the component orchestration area and connection relationships between respective components among all the components, wherein all the components comprise the plurality of first preset components, and the connection relationships between the respective components among all the components comprise a connection relationship between the first preset components.

7. The method according to claim 6, wherein all the components further comprise at least one second preset component, and the second preset component is any one of the plurality of preset components; the connection relationships between the respective components among all the components further comprise a connection relationship between the second preset component and an edge component, and the edge component is a component among the plurality of first preset components that has a connection relationship with the second preset component; the at least one second preset component comprises at least one third preset component, the edge component comprises an edge input component, and the third preset component is a component that transfers a parameter to the edge input component; and generating the target application based on all the components in the component orchestration area further comprises:
obtaining an output parameter of each third preset component;
aggregating the output parameter of each third preset component to obtain an input parameter set of the first same-container component; and
establishing, based on a connection relationship between each third preset component and the edge input component, a mapping relationship between each parameter in the input parameter set and an input parameter of the edge input component.

8. The method according to claim 7, wherein the at least one second preset component further comprises at least one fourth preset component, the edge component further comprises an edge output component, and the edge output component is a component that transfers a parameter to the fourth preset component; and generating the target application based on all the components in the component orchestration area further comprises:
obtaining an output parameter of each edge output component;
aggregating the output parameter of each edge output component to obtain an output parameter set of the first same-container component; and
establishing, based on a connection relationship between each fourth preset component and the edge output component, a mapping relationship between each parameter in the output parameter set and an input parameter of the fourth preset component.

9. The method according to claim 7 or 8, wherein the deployed target application further comprises a second container corresponding to each second preset component, and the second container is configured to run the corresponding second preset component.

10. The method according to any one of claims 1 to 9, wherein when the first container is running, a parameter is transferred between the plurality of first preset components by using a target data structure, and the target data structure is a data structure used in a memory.

11. An application deployment apparatus, wherein the apparatus comprises:
a user interface providing module, configured to provide a component orchestration interface, wherein the component orchestration interface comprises a component selection area and a component orchestration area, the component selection area comprises a same-container component and a plurality of preset components, the same-container component indicates that the plurality of preset components associated with the same-container component are to run in a same container, the component orchestration area is used to provide an operation area for a user to orchestrate a component, and the plurality of preset components comprise a service component and/or a logical component; and
a processing module, configured to: in response to an operation performed by the user in the component orchestration area, create a first same-container component in the component orchestration area, and determine a plurality of first preset components associated with the first same-container component, wherein the plurality of preset components comprise the plurality of first preset components, wherein
the processing module is further configured to: in response to a received application deployment request, deploy a target application comprising the plurality of first preset components, wherein the plurality of first preset components run in a first container corresponding to the first same-container component.

12. The apparatus according to claim 11, wherein
the processing module is further configured to: in response to a received application release request, generate the target application based on all components in the component orchestration area, wherein all the components comprise the first same-container component and the plurality of first preset components.

13. The apparatus according to claim 11 or 12, wherein the component orchestration interface further comprises a component configuration area; and the apparatus further comprises: an obtaining module, wherein
the obtaining module is configured to: obtain, from the component configuration area corresponding to the first same-container component, a size of a target resource amount, wherein the target resource amount is a resource amount required by the first container corresponding to the first same-container component; and
allocate the target resource amount to the first container.

14. The apparatus according to any one of claims 11 to 13, wherein
the processing module is further configured to decompress each first preset component to obtain a decompressed file corresponding to each first preset component;
the processing module is further configured to compress all decompressed files corresponding to the plurality of first preset components to obtain an integrated component; and
the processing module is further configured to generate the target application based on the integrated component.

15. The apparatus according to claim 14, wherein
the processing module is further configured to update an interface of each invoked first preset component to an interface of the integrated component.

16. The apparatus according to any one of claims 11 to 15, wherein
the processing module is further configured to generate the target application based on all the components in the component orchestration area and connection relationships between respective components among all the components, wherein all the components comprise the plurality of first preset components, and the connection relationships between the respective components among all the components comprise a connection relationship between the first preset components.

17. The apparatus according to claim 16, wherein all the components further comprise at least one second preset component, and the second preset component is any one of the plurality of preset components; the connection relationships between the respective components among all the components further comprise a connection relationship between the second preset component and an edge component, and the edge component is a component among the plurality of first preset components that has a connection relationship with the second preset component; and the at least one second preset component comprises at least one third preset component, the edge component comprises an edge input component, and the third preset component is a component that transfers a parameter to the edge input component;
the processing module is further configured to obtain an output parameter of each third preset component;
the processing module is further configured to aggregate the output parameter of each third preset component to obtain an input parameter set of the first same-container component; and
the processing module is further configured to establish, based on a connection relationship between each third preset component and the edge input component, a mapping relationship between each parameter in the input parameter set and an input parameter of the edge input component.

18. The apparatus according to claim 17, wherein the at least one second preset component further comprises at least one fourth preset component, the edge component further comprises an edge output component, and the edge output component is a component that transfers a parameter to the fourth preset component;
the processing module is further configured to obtain an output parameter of each edge output component;
the processing module is further configured to aggregate the output parameter of each edge output component to obtain an output parameter set of the first same-container component; and
the processing module is further configured to establish, based on a connection relationship between each fourth preset component and the edge output component, a mapping relationship between each parameter in the output parameter set and an input parameter of the fourth preset component.

19. The apparatus according to claim 17 or 18, wherein the deployed target application further comprises a second container corresponding to each second preset component, and the second container is configured to run the corresponding second preset component.

20. The apparatus according to any one of claims 11 to 19, wherein when the first container is running, a parameter is transferred between the plurality of first preset components by using a target data structure, and the target data structure is a data structure used in a memory.

21. A compute device cluster, comprising at least one compute device, wherein each compute device comprises a processor and a memory; and
the processor of the at least one compute device is configured to execute instructions stored in the memory of the at least one compute device, so that the compute device cluster performs the method according to any one of claims 1 to 10.

22. A computer program product comprising instructions, wherein when the instructions are run by an electronic device, the electronic device performs the method according to any one of claims 1 to 10.

23. A computer-readable storage medium, comprising computer program instructions, wherein when the computer program instructions are executed by a compute device cluster, the compute device cluster performs the method according to any one of claims 1 to 10.
